# EUROPEAN PATENT APPLICATION

(11) **EP 4 657 152 A1**
(43) Date of publication of application: **03.12.2025**
(21) Application number: 23918612.5
(22) Date of filing: 19.12.2023
(51) Int. Cl.: G03B 17/02, G03B 15/00, G03B 30/00, H04N 23/52, H04N 23/57

(54) **VEHICLE-MOUNTED CAMERA**

(30) Priority: 23.01.2023 JP 2023008360
(71) Applicant: Sony Semiconductor Solutions Corporation, Atsugi-shi, Kanagawa 243-0014 (JP)
(72) Inventor: IWASAKI, Yuuji, Atsugi-shi, Kanagawa 243-0014 (JP)
(74) Representative: Witte, Weller & Partner Patentanwälte mbB
(86) International application number: PCT/JP2023/045412
(87) International publication number: WO 2024/157658

(57) **Abstract**

An in-vehicle camera has a first substrate for imaging processing; a second substrate for information transmission; and a metal plate provided between the first substrate and the second substrate. The in-vehicle camera further has a first storage case made of metal that stores the first substrate, and a second storage case made of metal that stores the second substrate, and the metal plate is a part of either the first storage case or the second storage case.

## Description

### Field

The present invention relates to an in-vehicle camera.

### Background

Conventionally, a technique related to an imaging device suitable for an in-vehicle camera is known. For example, an imaging device having a plurality of substrates is known.

### Citation List

### Patent Literature

Patent Literature 1: JP 2011-259101 A

### Summary

### Technical Problem

However, in the above-described conventional technique, EMC (electromagnetic compatibility) performance cannot be always improved. For example, in the above-described conventional technique, since a plurality of substrates is merely covered with one metal case, EMC performance may not be always improved in the above-described conventional technique.

Therefore, the present disclosure proposes an in-vehicle camera enabling improvement of the EMC performance. Solution to Problem

In order to solve the above problems, An in-vehicle camera according to one embodiment of the present disclosure includes a first substrate for imaging processing, a second substrate for information transmission, and a metal plate provided between the first substrate and the second substrate.

### Brief Description of Drawings

FIG. 1 is a block diagram illustrating a configuration example of a vehicle control system.
FIG. 2 is a view illustrating an example of a sensing area.
FIG. 3 is a view illustrating an example of a processed image G generated by a recognition unit 73.
FIG. 4 is a schematic view of an in-vehicle camera 100 according to an embodiment of the present disclosure.
FIG. 5 is a top view of the in-vehicle camera 100 according to the embodiment.
FIG. 6 is a bottom view of the in-vehicle camera 100 according to the embodiment.
FIG. 7 is a left side view of the in-vehicle camera 100 according to the embodiment.
FIG. 8 is a right side view of the in-vehicle camera 100 according to the embodiment.
FIG. 9 is a rear view of the in-vehicle camera 100 according to the embodiment.
FIG. 10 is a front view of the in-vehicle camera 100 according to the embodiment.
FIG. 11 is a cross-sectional view taken along line A-A of the in-vehicle camera 100 according to the embodiment.
FIG. 12 is a cross-sectional view taken along line B-B of the in-vehicle camera 100 according to the embodiment.
FIG. 13 is a view illustrating an outline of an assembly order of the in-vehicle camera 100 according to the embodiment.
FIG. 14 is a view illustrating an assembly order of a first component group in which a lens module component group 200 and a first substrate 500 according to the embodiment are combined.
FIG. 15 is a view illustrating an assembly order of a front component group 5000 according to the embodiment.
FIG. 16 is a view illustrating an assembly order of a rear component group 6000 according to the embodiment.
FIG. 17 is a view illustrating the assembly order of the in-vehicle camera 100 according to the embodiment.
FIG. 18 is a simplified view illustrating a state before connection of the front component group 5000 and the rear component group 6000 according to the embodiment.
FIG. 19 is a view illustrating a structure of the rear component group 6000 according to the embodiment.
FIG. 20 is a view illustrating the structure of the rear component group 6000 according to the embodiment.
FIG. 21 is a view illustrating an assembly order of a pressing member 710 according to the embodiment.
FIG. 22 is a view illustrating the assembly order of the pressing member 710 according to the embodiment.
FIG. 23 is a simplified view illustrating a state after the connection of the front component group 5000 and the rear component group 6000 according to the embodiment.
FIG. 24 is a view for explaining a track for assembling the front component group 5000 and the rear component group 6000 according to the embodiment. Description of Embodiments

In the following, modes for carrying out the present technique will be described. Note that description will be given in the following order.
1. Configuration Example of Vehicle Control System
2. Configuration Example of In-Vehicle Camera

### <<1. Configuration Example of Vehicle Control System>>

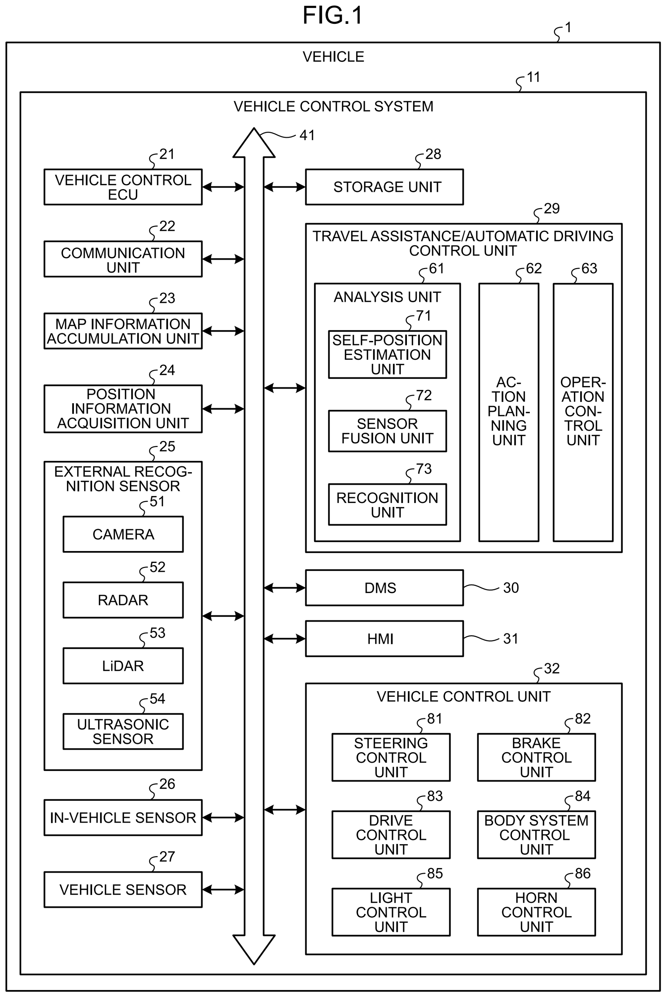

FIG. 1 is a block diagram illustrating a configuration example of a vehicle control system 11 which is an example of a mobile device control system to which the present technique is applied.

The vehicle control system 11 is provided in a vehicle 1 and performs processing related to travel assistance and automatic driving of the vehicle 1.

The vehicle control system 11 includes a vehicle control ECU (Electronic Control Unit) 21, a communication unit 22, a map information accumulation unit 23, a position information acquisition unit 24, an external recognition sensor 25, an in-vehicle sensor 26, a vehicle sensor 27, a storage unit 28, a travel assistance/automatic driving control unit 29, a DMS (Driver Monitoring System) 30, an HMI (Human Machine Interface) 31, and a vehicle control unit 32.

The vehicle control ECU 21, the communication unit 22, the map information accumulation unit 23, the position information acquisition unit 24, the external recognition sensor 25, the in-vehicle sensor 26, the vehicle sensor 27, the storage unit 28, the travel assistance/automatic driving control unit 29, the driver monitoring system (DMS) 30, the human machine interface (HMI) 31, and the vehicle control unit 32 are communicably connected to each other via a communication network 41. The communication network 41 is configured by, for example, an in-vehicle communication network, a bus, or the like conforming to a digital bidirectional communication standard such as a CAN (Controller Area Network), a LIN (Local Interconnect Network), a LAN (Local Area Network), FlexRay (registered trademark), or the Ethernet (registered trademark). The communication network 41 may be selectively used depending on a type of data to be transmitted. For example, the CAN may be applied to data related to vehicle control, and the Ethernet may be applied to large-capacity data. Note that each unit of the vehicle control system 11 may be directly connected not via the communication network 41 but by using wireless communication that assumes communication at a relatively short distance, such as NFC (Near Field Communication) or Bluetooth (registered trademark).

Note that, in the following, in a case where each unit of the vehicle control system 11 performs communication via the communication network 41, description of the communication network 41 will be omitted. For example, in a case where the vehicle control ECU 21 and the communication unit 22 communicate with each other via the communication network 41, it is simply described that the vehicle control ECU 21 and the communication unit 22 communicate with each other.

The vehicle control ECU 21 is configured by, for example, various processors such as CPU (Central Processing Unit) and MPU (Micro Processing Unit). The vehicle control ECU 21 controls the entire or a part of functions of the vehicle control system 11.

The communication unit 22 communicates with various apparatuses inside and outside a vehicle, other vehicles, servers, base stations, and the like, and transmits and receives various data. At this time, the communication unit 22 can perform communication using a plurality of communication methods.

Schematic description will be made of executable communication with the outside of the vehicle by the communication unit 22. The communication unit 22 communicates with a server (hereinafter, it is referred to as an external server) or the like existing on an external network via a base station or an access point by a wireless communication method such as 5G (5th Generation Mobile Communication System), LTE (Long Term Evolution), or DSRC (Dedicated Short Range Communications). An external network with which the communication unit 22 communicates is, for example, the Internet, a cloud network, a network unique to a company, or the like. A communication method performed by the communication unit 22 with the external network is not particularly limited as long as it is a wireless communication method enabling digital bidirectional communication at a communication speed equal to or higher than a predetermined speed and at a distance equal to or longer than a predetermined distance.

Furthermore, for example, the communication unit 22 can communicate with a terminal present in the vicinity of the host vehicle using a P2P (Peer to Peer) technique. The terminal present in the vicinity of the host vehicle is, for example, a terminal worn by a moving body that moves at a relatively low speed such as a pedestrian or a bicycle, a terminal installed in a store or the like with a position fixed, or an MTC (Machine Type Communication) terminal. Furthermore, the communication unit 22 can also perform V2X communication. The V2X communication refers to, for example, communication between the host vehicle and another vehicle, such as vehicle to vehicle communication with another vehicle, vehicle to infrastructure communication with a roadside apparatus or the like, vehicle to home communication, and vehicle to pedestrian communication with a terminal or the like held by a pedestrian.

For example, the communication unit 22 can receive (over the air) a program for updating software for controlling operation of the vehicle control system 11 from the outside. The communication unit 22 can further receive map information, traffic information, information around the vehicle 1, and the like from the outside. Furthermore, for example, the communication unit 22 can transmit information on the vehicle 1, the information around the vehicle 1, and the like to the outside. Examples of the information on the vehicle 1 transmitted to the outside by the communication unit 22 include data indicating a state of the vehicle 1, a recognition result obtained by a recognition unit 73, and the like. Furthermore, for example, the communication unit 22 performs communication corresponding to a vehicle emergency call system such as an eCall.

For example, the communication unit 22 receives an electromagnetic wave transmitted by a road traffic information communication system (VICS (Vehicle Information and Communication System) (registered trademark)) such as a radio wave beacon, an optical beacon, or FM multiplex broadcasting.

Executable communication of the communication unit 22 with the inside of the vehicle will be schematically described. The communication unit 22 can communicate with each apparatus in the vehicle by using, for example, wireless communication. The communication unit 22 can perform the wireless communication with an apparatus in a vehicle by a communication method enabling digital bidirectional communication at a predetermined communication speed or higher by wireless communication, such as wireless LAN, Bluetooth, NFC, or WUSB (Wireless USB). The present invention is not limited thereto, and the communication unit 22 can also communicate with each apparatus in the vehicle using wired communication. For example, the communication unit 22 can communicate with each apparatus in the vehicle by wired communication via a cable connected to a connection terminal (not illustrated). For example, the communication unit 22 can communicate with each apparatus in the vehicle by a communication method enabling digital bidirectional communication at a predetermined communication speed or higher by wired communication, such as USB (Universal Serial Bus), HDMI (High-Definition Multimedia Interface) (registered trademark), or MHL (Mobile High-Definition Link).

Here, the apparatus in a vehicle refers to, for example, an apparatus that is not connected to the communication network 41 in the vehicle. As an apparatus in a vehicle, for example, a mobile apparatus or a wearable apparatus carried by a passenger such as a driver, an information apparatus brought into the vehicle and temporarily installed, or the like is assumed.

The map information accumulation unit 23 accumulates one or both of a map acquired from the outside and a map created by the vehicle 1. The map information accumulation unit 23 accumulates, for example, a three-dimensional high-precision map, a global map having lower accuracy than the high-precision map and covering a wide area, and the like.

The high-precision map is, for example, a dynamic map, a point cloud map, a vector map, or the like. The dynamic map is, for example, a map configured with four layers of dynamic information, semi-dynamic information, semi-static information, and static information, and is provided to the vehicle 1 from an external server or the like. The point cloud map is a map configured with point clouds (point cloud data). The vector map is, for example, a map in which traffic information such as a lane and a position of a traffic light is associated with a point cloud map and adapted to ADAS (Advanced Driver Assistance System) or AD (Autonomous Driving).

The point cloud map and the vector map may be provided from, for example, an external server or the like, or may be created by the vehicle 1 as a map for performing matching with a local map to be described later on the basis of a sensing result by a camera 51, a radar 52, a LiDAR 53, or the like, and may be accumulated in the map information accumulation unit 23. In addition, in a case where a high-precision map is provided from an external server or the like, for example, map data of several hundred meters square regarding a planned path on which the vehicle 1 travels from now is acquired from the external server or the like in order to reduce a communication capacity.

The position information acquisition unit 24 receives a GNSS (Global Navigation Satellite System) signal from a GNSS satellite, and acquires position information of the vehicle 1. The acquired position information is supplied to the travel assistance/automatic driving control unit 29. Note that the position information acquisition unit 24 is not limited to a method using the GNSS signal, and may acquire the position information using, for example, a beacon.

The external recognition sensor 25 includes various sensors for use for recognizing a situation outside the vehicle 1, and supplies sensor data from each sensor to each unit of the vehicle control system 11. The type and number of sensors included in the external recognition sensor 25 are arbitrary.

The external recognition sensor 25 includes, for example, the camera 51, the radar 52, the LiDAR (Light Detection and Ranging, Laser Imaging Detection and Ranging) 53, and an ultrasonic sensor 54. The present invention is not limited thereto, and the external recognition sensor 25 may be configured to include one or more types of sensors among the camera 51, the radar 52, the LiDAR 53, and the ultrasonic sensor 54. The numbers of the cameras 51, the radars 52, the LiDAR 53, and the ultrasonic sensors 54 are not particularly limited as long as they can be practically installed in the vehicle 1. Furthermore, the type of sensor included in the external recognition sensor 25 is not limited to this example, and the external recognition sensor 25 may include another type of sensor. An example of a sensing area of each sensor included in the external recognition sensor 25 will be described later.

Note that an imaging method of the camera 51 is not particularly limited. For example, cameras of various imaging methods such as a ToF (Time-of-Flight) camera, a stereo camera, a monocular camera, and an infrared camera, which employ imaging methods enabling distance measurement, can be applied to the camera 51 as necessary. The present invention is not limited thereto, and the camera 51 may simply acquire a captured image regardless of distance measurement.

Furthermore, the external recognition sensor 25 is, for example, allowed to include an environment sensor for detecting an environment for the vehicle 1. The environment sensor is a sensor for detecting an environment such as weather, climate, brightness, and the like, and can include various sensors such as a raindrop sensor, a fog sensor, a sunshine sensor, a snow sensor, and an illuminance sensor.

Furthermore, for example, the external recognition sensor 25 includes a microphone for use for detecting a sound around the vehicle 1, a position of a sound source, and the like.

The in-vehicle sensor 26 includes various sensors for detecting information inside the vehicle, and supplies sensor data from each sensor to each unit of the vehicle control system 11. The types and numbers of various sensors included in the in-vehicle sensor 26 are not particularly limited as long as they are types and numbers that can be practically installed in the vehicle 1.

For example, the in-vehicle sensor 26 can include one or more sensors of a camera, a radar, a seating sensor, a steering wheel sensor, a microphone, and a biological sensor. As a camera included in the in-vehicle sensor 26, for example, cameras of various imaging methods enabling distance measurement, such as a ToF camera, a stereo camera, a monocular camera, and an infrared camera, can be used. The present invention is not limited thereto, and the camera included in the in-vehicle sensor 26 may simply acquire a captured image regardless of distance measurement. The biological sensor included in the in-vehicle sensor 26 is provided, for example, on a seat, a steering wheel, or the like, and detects various types of biological information of a passenger such as a driver.

The vehicle sensor 27 includes various sensors for detecting a state of the vehicle 1, and supplies sensor data from each sensor to each unit of the vehicle control system 11. The types and numbers of various sensors included in the vehicle sensor 27 are not particularly limited as long as they are types and numbers that can be practically installed in the vehicle 1.

For example, the vehicle sensor 27 includes a speed sensor, an acceleration sensor, an angular velocity sensor (gyro sensor), and an IMU (Inertial Measurement Unit) integrating these sensors. For example, the vehicle sensor 27 includes a steering angle sensor that detects a steering angle of a steering wheel, a yaw rate sensor, an accelerator sensor that detects an operation amount of an accelerator pedal, and a brake sensor that detects an operation amount of a brake pedal. For example, the vehicle sensor 27 includes a rotation sensor that detects an engine speed of an engine or a motor, an air pressure sensor that detects an air pressure of a tire, a slip rate sensor that detects a slip rate of the tire, and a wheel speed sensor that detects a rotation speed of a wheel. For example, the vehicle sensor 27 includes a battery sensor that detects a remaining amount and a temperature of a battery, and an impact sensor that detects an external impact.

The storage unit 28 includes at least one of a nonvolatile storage medium and a volatile storage medium, and stores data and a program. The storage unit 28 is used as, for example, an EEPROM (Electrically Erasable Programmable Read Only Memory) and a RAM (Random Access Memory), and a magnetic storage device such as an HDD (Hard Disc Drive), a semiconductor storage device, an optical storage device, and a magneto-optical storage device can be applied as a storage medium. The storage unit 28 stores various programs and data used by each unit of the vehicle control system 11. For example, the storage unit 28 includes an EDR (Event Data Recorder) and a DSSAD (Data Storage System for Automated Driving), and stores information of the vehicle 1 before and after an event such as an accident and information acquired by the in-vehicle sensor 26.

The travel assistance/automatic driving control unit 29 controls travel assistance and automatic driving of the vehicle 1. For example, the travel
assistance/automatic driving control unit 29 includes an analysis unit 61, an action planning unit 62, and an operation control unit 63.

The analysis unit 61 performs analysis processing of situations of the vehicle 1 and the surroundings. The analysis unit 61 includes a self-position estimation unit 71, a sensor fusion unit 72, and the recognition unit 73.

The self-position estimation unit 71 estimates a self-position of the vehicle 1 on the basis of the sensor data from the external recognition sensor 25 and the high-precision map accumulated in the map information accumulation unit 23. For example, the self-position estimation unit 71 generates a local map on the basis of the sensor data from the external recognition sensor 25, and estimates the self-position of the vehicle 1 by matching the local map with the high-precision map. The position of the vehicle 1 is based on, for example, the center of a rear wheel pair axle.

The local map is, for example, a three-dimensional high-precision map created using a technique such as SLAM (Simultaneous Localization and Mapping), an occupancy grid map, or the like. The three-dimensional high-precision map is, for example, the above-described point cloud map or the like. The occupancy grid map is a map in which a three-dimensional or two-dimensional space around the vehicle 1 is divided into grids of a predetermined size, and an occupancy state of an object is indicated on a grid basis. The occupancy state of the object is indicated by, for example, presence or absence or an existence probability of the object. The local map is also used for detection processing and recognition processing of a situation outside the vehicle 1 by the recognition unit 73, for example.

Note that the self-position estimation unit 71 may estimate the self-position of the vehicle 1 on the basis of the position information acquired by the position information acquisition unit 24 and the sensor data from the vehicle sensor 27.

The sensor fusion unit 72 performs sensor fusion processing of combining a plurality of different types of sensor data (e.g., image data supplied from the camera 51 and sensor data supplied from the radar 52) to obtain new information. Methods for combining different types of sensor data include integration, fusion, association, and the like.

The recognition unit 73 executes the detection processing for detecting the situation outside the vehicle 1 and the recognition processing for recognizing the situation outside the vehicle 1.

For example, the recognition unit 73 performs the detection processing and the recognition processing of the situation outside the vehicle 1 on the basis of the information from the external recognition sensor 25, the information from the self-position estimation unit 71, the information from the sensor fusion unit 72, and the like.

Specifically, for example, the recognition unit 73 performs detection processing, recognition processing, and the like of an object around the vehicle 1. The object detection processing is, for example, processing of detecting presence or absence, size, shape, position, movement, and the like of an object. The object recognition processing is, for example, processing of recognizing an attribute such as a type of object or identifying a specific object. However, the detection processing and the recognition processing are not necessarily clearly divided, and may overlap with each other.

For example, the recognition unit 73 detects an object around the vehicle 1 by performing clustering to classify point clouds based on the sensor data by the radar 52, the LiDAR 53, or the like into clusters of point clouds. As a result, the presence or absence, size, shape, and position of the object around the vehicle 1 are detected.

For example, the recognition unit 73 detects movement of the object around the vehicle 1 by performing tracking that follows movement of the cluster of the point clouds classified by the clustering. As a result, a speed and a traveling direction (movement vector) of the object around the vehicle 1 are detected.

For example, the recognition unit 73 detects or recognizes a vehicle, a person, a bicycle, an obstacle, a structure, a road, a traffic light, a traffic sign, a road sign, and the like on the basis of the image data supplied from the camera 51. Furthermore, the recognition unit 73 may recognize the type of the object around the vehicle 1 by performing recognition processing such as semantic segmentation.

For example, the recognition unit 73 can perform recognition processing of traffic rules around the vehicle 1 on the basis of the maps accumulated in the map information accumulation unit 23, the estimation result of the self position by the self-position estimation unit 71, and the recognition result of the object around the vehicle 1 by the recognition unit 73. Through this processing, the recognition unit 73 can recognize a position and a state of the traffic light, contents of the traffic sign and the road sign, contents of traffic regulation, a lane on which a vehicle can travel, and the like.

For example, the recognition unit 73 can perform recognition processing of an environment around the vehicle 1. As a surrounding environment to be recognized by the recognition unit 73, weather, temperature, humidity, brightness, a state of a road surface, and the like are assumed.

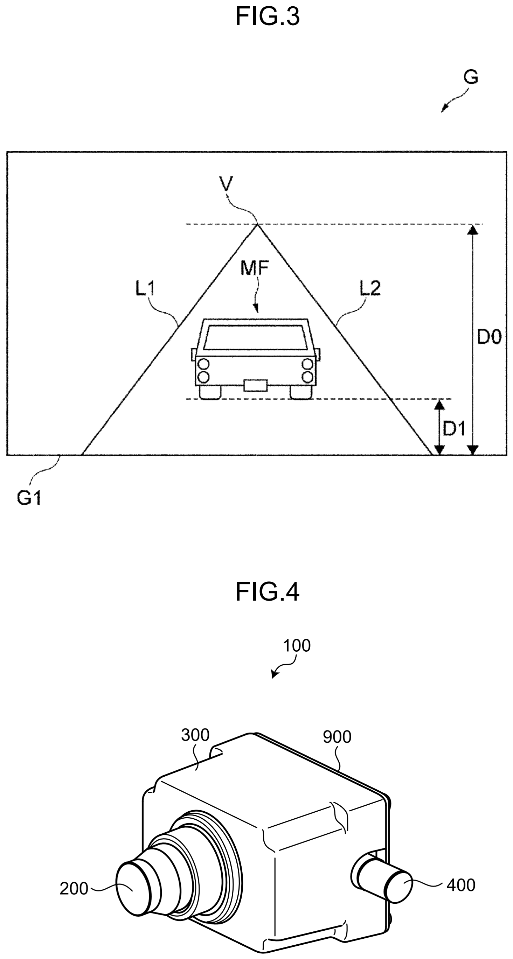

For example, the recognition unit 73 can measure a distance to an object around the vehicle 1. As an example of a method of calculating object information by the recognition unit 73, a method of calculating an inter-vehicle distance from a preceding vehicle MF will be described. FIG. 3 illustrates an example of a processed image G generated by the recognition unit 73. In the processed image G illustrated in FIG. 3, the preceding vehicle MF and two lanes L1 and L2 defining travel lanes are illustrated.

First, a vanishing point V at which the two lanes L1 and L2 intersect in the processed image G is obtained. The vanishing point V may be obtained from another object regardless of the lanes L1 and L2. For example, the recognition unit 73 can also obtain the vanishing point V by using a movement trajectory of a curbstone of a sidewalk, a fixed object such as a traffic sign in a plurality of processed images, and the like.

Next, obtained are a distance D0 (a dimension in an up-down direction in an image) from a lower edge G1 of the processed image to the vanishing point V and a distance D1 (a dimension in the up-down direction in the image) from the lower edge G1 of the processed image to the preceding vehicle MF. The inter-vehicle distance from the preceding vehicle MF can be obtained using the distances D0 and D1. For example, the inter-vehicle distance from the preceding vehicle MF can be calculated by using a ratio between the distance D0 and the distance D1. As described above, in a case where the distance calculation is performed on the basis of a pixel position of a target object in a captured image, when the processing is performed using an image that is out of focus or an image with a lot of noise, a detection position of the object may deviate, and accuracy of the calculated distance may deteriorate. Therefore, an in-vehicle camera 100 according to the embodiment of the present disclosure is particularly suitable for a camera that performs such image processing.

The action planning unit 62 creates an action plan of the vehicle 1. For example, the action planning unit 62 creates an action plan by performing processing of global path planning and path follow-up.

Note that the global path planning is processing of planning a rough path from a start to a goal. This global path planning includes processing called a track plan of performing local path planning that enables safe and smooth traveling in the vicinity of the vehicle 1 in consideration of motion characteristics of the vehicle 1 in the planned route.

The path follow-up is processing of planning operation for safely and accurately traveling a path planned by global path planning within a planned time. For example, the action planning unit 62 can calculate a target speed and a target angular velocity of the vehicle 1 on the basis of a result of the path follow-up processing.

The operation control unit 63 controls the operation of the vehicle 1 in order to realize the action plan created by the action planning unit 62.

For example, the operation control unit 63 controls a steering control unit 81, a brake control unit 82, and a drive control unit 83 included in the vehicle control unit 32 to be described later to perform acceleration/deceleration control and direction control such that the vehicle 1 travels on the track calculated by the track plan. For example, the operation control unit 63 performs cooperative control for the purpose of implementing the functions of the ADAS such as collision avoidance or impact mitigation, follow-up traveling, vehicle speed maintaining traveling, collision warning of the host vehicle, lane deviation warning of the host vehicle, and the like. For example, the operation control unit 63 performs cooperative control for the purpose of automatic driving or the like in which the vehicle autonomously travels without depending on driver' operation.

The DMS 30 performs authentication processing of a driver, recognition processing of a state of the driver, and the like on the basis of the sensor data from the in-vehicle sensor 26, input data input to the HMI 31 to be described later, and the like. As a state of the driver to be recognized, for example, a physical condition, a wakefulness level, a concentration level, a fatigue level, a line-of-sight direction, a drunkenness level, driving operation, posture, and the like are assumed.

Note that the DMS 30 may perform authentication processing of a passenger other than the driver and recognition processing of a state of the passenger. Furthermore, for example, the DMS30 may perform recognition processing of a situation inside the vehicle on the basis of the sensor data from the in-vehicle sensor 26. As a situation inside the vehicle to be recognized, for example, temperature, humidity, brightness, odor, and the like are assumed.

The HMI 31 inputs various data, instructions, and the like, and presents the various data to the driver and the like.

Data input by the HMI 31 will be schematically described. The HMI 31 includes an input device for a person to input data. The HMI 31 generates an input signal on the basis of data, an instruction, or the like input by the input device, and supplies the input signal to each unit of the vehicle control system 11. The HMI 31 includes an operation element such as a touch panel, a button, a switch, and a lever as the input device. The present invention is not limited thereto, and the HMI 31 may further include an input device capable of inputting information by a method other than manual operation by voice, gesture, or the like. Furthermore, as the input device, the HMI 31 may use, for example, a remote control device using infrared rays or radio waves, or an external connection apparatus such as a mobile apparatus or a wearable apparatus corresponding to the operation of the vehicle control system 11.

Presentation of data by the HMI 31 will be schematically described. The HMI 31 generates visual information, auditory information, and tactile information for the passenger or the outside of the vehicle. In addition, the HMI 31 performs output control for controlling output of each piece of generated information, output contents, output timing, an output method, and the like. As the visual information, the HMI 31 generates and outputs, for example, information indicated by an image and a light, such as an operation screen, a state display of the vehicle 1, a warning display, and a monitor image indicating a situation around the vehicle 1. In addition, as the auditory information, the HMI 31 generates and outputs information indicated by sounds such as a voice guidance, a warning sound, and a warning message, for example. Furthermore, the HMI 31 generates and outputs, as the tactile information, information given to passenger's tactile sense by, for example, force, vibration, movement, or the like.

As an output device from which the HMI 31 outputs visual information, for example, a display device that presents visual information by displaying an image by a user itself or a projector device that presents visual information by projecting an image can be applied. Note that in addition to a display device having an ordinary display, the display device may be a device that displays visual information in a field of view of the passenger, such as a head-up display, a transmissive display, or a wearable device having an AR (Augmented Reality) function. In addition, in the HMI 31, a display device included in a navigation device, an instrument panel, a CMS (Camera Monitoring System), an electronic mirror, a lamp, or the like provided in the vehicle 1 can also be used as an output device that outputs visual information.

As an output device from which the HMI 31 outputs the auditory information, for example, an audio speaker, a headphone, or an earphone can be applied.

As an output device from which the HMI 31 outputs the tactile information, for example, a haptic element using a haptic technique can be applied. The haptics element is provided, for example, at a part with which the passenger of the vehicle 1 comes into contact, such as a steering wheel or a seat.

The vehicle control unit 32 controls each unit of the vehicle 1. The vehicle control unit 32 includes the steering control unit 81, the brake control unit 82, the drive control unit 83, a body system control unit 84, a light control unit 85, and a horn control unit 86.

The steering control unit 81 detects and controls a state of a steering system of the vehicle 1. The steering system includes, for example, a steering mechanism including a steering wheel and the like, an electric power steering, and the like. The steering control unit 81 includes, for example, a steering ECU that controls the steering system, an actuator that drives the steering system, and the like.

The brake control unit 82 detects and controls a state of a brake system of the vehicle 1. The brake system includes, for example, a brake mechanism including a brake pedal, an ABS (Antilock Brake System), a regenerative brake mechanism, and the like. The brake control unit 82 includes, for example, a brake ECU that controls the brake system, an actuator that drives the brake system, and the like.

The drive control unit 83 detects and controls a state of a drive system of the vehicle 1. The drive system includes, for example, a driving force generation device for generating a driving force of an accelerator pedal, an internal combustion engine, or a driving motor, a driving force transmission mechanism for transmitting the driving force to wheels, and the like. The drive control unit 83 includes, for example, a drive ECU that controls the drive system, an actuator that drives the drive system, and the like.

The body system control unit 84 detects and controls a state of a body system of the vehicle 1. The body system includes, for example, a keyless entry system, a smart key system, a power window device, a power seat, an air conditioner, an airbag, a seat belt, a shift lever, and the like. The body system control unit 84 includes, for example, a body system ECU that controls the body system, an actuator that drives the body system, and the like.

The light control unit 85 detects and controls states of various lights of the vehicle 1. As a light to be controlled, for example, a headlight, a backlight, a fog light, a turn signal, a brake light, a projection, a display of a bumper, and the like are assumed. The light control unit 85 includes a light ECU that controls light, an actuator that drives light, and the like.

The horn control unit 86 detects and controls a state of a car horn of the vehicle 1. The horn control unit 86 includes, for example, a horn ECU that controls the car horn, an actuator that drives the car horn, and the like.

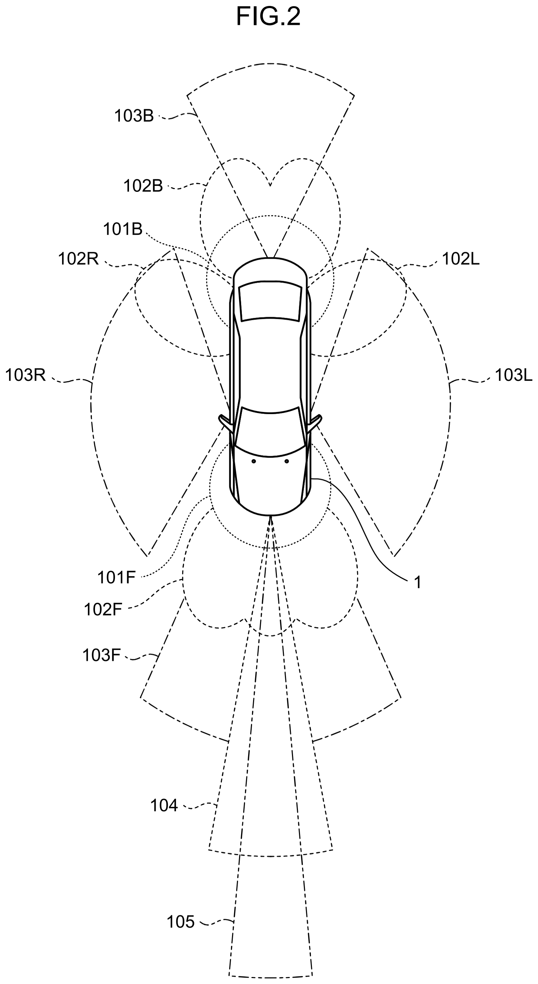

FIG. 2 is a view illustrating an example of a sensing area by the camera 51, the radar 52, the LiDAR 53, the ultrasonic sensor 54, and the like of the external recognition sensor 25 in FIG. 1. Note that FIG. 2 schematically illustrates the vehicle 1 as viewed from above, where a left end side is a front end (front) side of the vehicle 1 and a right end side is a rear end (rear) side of the vehicle 1.

A sensing area 101F and a sensing area 101B show examples of the sensing area of the ultrasonic sensor 54. The sensing area 101F covers a periphery of the front end of the vehicle 1 by a plurality of the ultrasonic sensors 54. The sensing area 101B covers a periphery of the rear end of the vehicle 1 by the plurality of ultrasonic sensors 54.

Sensing results in the sensing area 101F and the sensing area 101B are used, for example, for parking assistance of the vehicle 1.

Sensing areas 102F to 102B show examples of sensing areas of the radar 52 for a short range or a middle range. The sensing area 102F covers a position farther than the sensing area 101F in front of the vehicle 1. The sensing area 102B covers a position farther than the sensing area 101B behind the vehicle 1. A sensing area 102L covers a rear periphery of a left side surface of the vehicle 1. A sensing area 102R covers a rear periphery of a right side surface of the vehicle 1.

A sensing result in the sensing area 102F is used, for example, to detect a vehicle, a pedestrian, or the like existing in front of the vehicle 1. The sensing result in the sensing area 102B is used, for example, for a collision prevention function or the like behind the vehicle 1. Sensing results in the sensing area 102L and the sensing area 102R are used, for example, to detect an object in a blind spot on the side of the vehicle 1.

A sensing area 103F to a sensing area 103B show examples of sensing areas by the camera 51. The sensing area 103F covers a position farther than the sensing area 102F in front of the vehicle 1. The sensing area 103B covers a position farther than the sensing area 102B behind the vehicle 1. A sensing area 103L covers a periphery of the left side surface of the vehicle 1. A sensing area 103R covers a periphery of the right side surface of the vehicle 1.

A sensing result in the sensing area 103F can be used for, for example, recognition of a traffic light or a traffic sign, a lane deviation prevention assistance system, and an automatic headlight control system. A sensing result in the sensing area 103B can be used for, for example, parking assistance and a surround view system. Sensing results in the sensing area 103L and the sensing area 103R can be used for a surround view system, for example.

A sensing area 104 shows an example of a sensing area of the LiDAR 53. The sensing area 104 covers a position farther than the sensing area 103F in front of the vehicle 1. On the other hand, the sensing area 104 has a narrower range in a left-right direction than the sensing area 103F.

A sensing result in the sensing area 104 is used, for example, to detect an object such as a surrounding vehicle.

A sensing area 105 shows an example of a sensing area of the radar 52 for a long range. The sensing area 105 covers a position farther than the sensing area 104 in front of the vehicle 1. On the other hand, the sensing area 105 has a narrower range in the left-right direction than the sensing area 104.

A sensing result in the sensing area 105 is used for, for example, ACC (Adaptive Cruise Control), emergency braking, collision avoidance, and the like.

Note that the sensing areas of the sensors, the camera 51, the radar 52, the LiDAR 53, and the ultrasonic sensor 54 included in the external recognition sensor 25 may have various configurations other than those illustrated in FIG. 2. Specifically, the ultrasonic sensor 54 may also sense the side of the vehicle 1, or the LiDAR 53 may sense the rear of the vehicle 1. In addition, the installation position of each sensor is not limited to each example described above. The number of sensors may be one or more.

### <<2. Configuration Example of In-Vehicle Camera>>

A configuration of the in-vehicle camera 100 according to the embodiment of the present disclosure will be described below with reference to FIGS. 4 to 24. The in-vehicle camera 100 according to the embodiment of the present disclosure corresponds to the camera 51 described with reference to FIGS. 1 and 2. For example, in a case where processing such as map creation and path planning is performed using a captured image, when the processing is performed using an image that is out of focus or an image with a lot of noise, the processing may be inaccurate. Therefore, the in-vehicle camera 100 according to the embodiment of the present disclosure can be particularly suitably employed for a camera that performs such image processing.

First, an appearance of the in-vehicle camera 100 according to the embodiment of the present disclosure will be described with reference to FIGS. 4 to 10.

FIG. 4 is a perspective view of the in-vehicle camera 100 according to the embodiment of the present disclosure. As illustrated in FIG. 4, the in-vehicle camera 100 includes a lens module component group 200, a third storage case 300, an external connection connector 400, and a rear chassis 900.

The lens module component group 200 is a component group including an optical member (e.g., a lens), and is provided on a front (also referred to as a front surface) of the in-vehicle camera 100. A lens barrel of the lens module component group 200 is formed of a conductive member such as metal.

The third storage case 300 is, for example, an outer casing made of a non-conductive member such as resin (e.g., a synthetic resin such as plastic). An opening is formed on one surface of the third storage case 300.

The external connection connector 400 is a connector that connects the in-vehicle camera 100 and an external apparatus or device (e.g., an apparatus or a device corresponding to the recognition unit 73 illustrated in FIG. 1).

The rear chassis 900 is an outer casing made of a conductive member such as metal, and is provided on a back surface (also referred to as a rear surface) of the in-vehicle camera 100. The rear chassis 900 functions as a lid that closes the opening formed on one surface of the third storage case 300. The third storage case 300 and the rear chassis 900 form a main body portion of the in-vehicle camera 100 having a substantially rectangular parallelepiped shape.

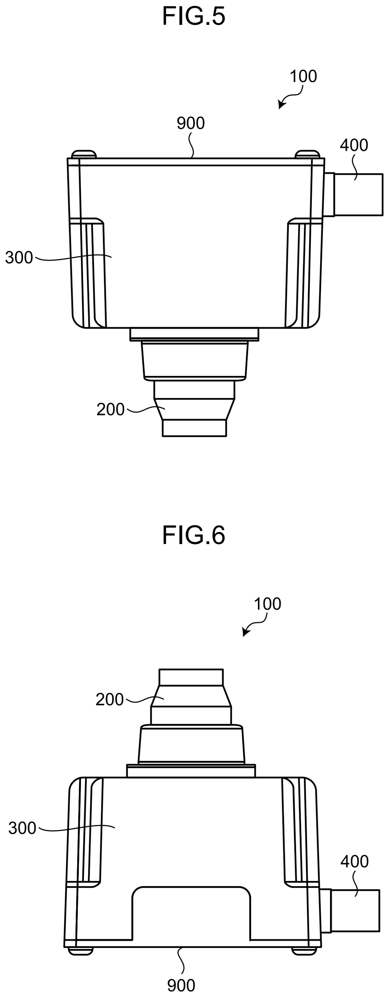

FIG. 5 is a top view of the in-vehicle camera 100 according to the embodiment of the present disclosure. FIG. 5 is a view of the in-vehicle camera 100 as viewed from an upper surface side of the in-vehicle camera 100. In FIG. 5, an upper surface of the main body portion of the in-vehicle camera 100 is formed by an upper surface of the third storage case 300. The upper surface of the third storage case 300 has a substantially trapezoidal shape in which a side on the rear chassis 900 side is slightly longer than a side on the lens module component group 200 side.

FIG. 6 is a bottom view of the in-vehicle camera 100 according to the embodiment of the present disclosure. FIG. 6 is a view of the in-vehicle camera 100 as viewed from a bottom side of the in-vehicle camera 100. FIG. 6 is a view of the in-vehicle camera 100 viewed from a direction opposite to that in FIG. 5. In FIG. 6, the bottom surface of the main body portion of the in-vehicle camera 100 is formed by a bottom surface of the third storage case 300. The bottom surface of the third storage case 300 has a substantially trapezoidal shape in which the side on the rear chassis 900 side is slightly longer than the side on the lens module component group 200 side.

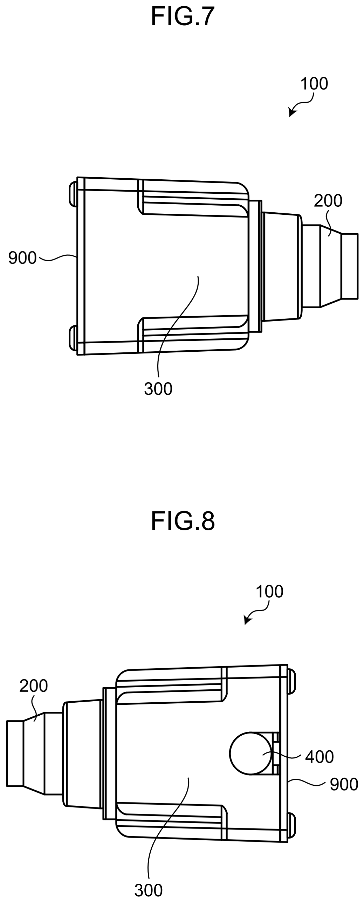

FIG. 7 is a left side view of the in-vehicle camera 100 according to the embodiment of the present disclosure. FIG. 7 is a view of the in-vehicle camera 100 as viewed from a left side of the in-vehicle camera 100. In FIG. 7, a left side surface of the main body portion of the in-vehicle camera 100 is formed by a left side surface of the third storage case 300. The left side surface of the third storage case 300 has a substantially trapezoidal shape in which the side on the rear chassis 900 side is slightly longer than the side on the lens module component group 200 side.

FIG. 8 is a right side view of the in-vehicle camera 100 according to the embodiment of the present disclosure. FIG. 8 is a view of the in-vehicle camera 100 as viewed from a right side of the in-vehicle camera 100. FIG. 8 is a view of the in-vehicle camera 100 viewed from a direction opposite to that in FIG. 7. In FIG. 8, a right side surface of the main body portion of the in-vehicle camera 100 is formed by a right side surface of the third storage case 300. The right side surface of the third storage case 300 has a substantially trapezoidal shape in which the side on the rear chassis 900 side is slightly longer than the side on the lens module component group 200 side. In addition, on the right side surface of the third storage case 300, a notch portion is formed which is a part cut out from an outer periphery of the opening of the third storage case 300. The external connection connector 400 is drawn out from the inside of the in-vehicle camera 100 to the outside of the main body portion of the in-vehicle camera 100 through the notch portion formed on the right side surface of the third storage case 300.

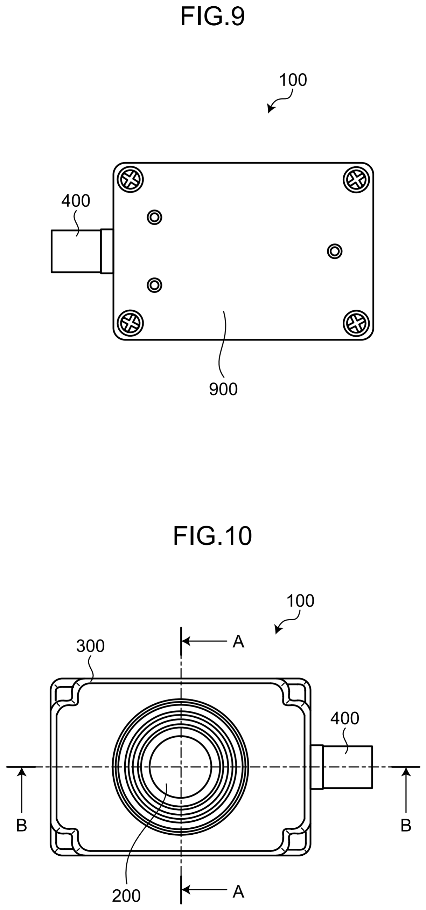

FIG. 9 is a rear view of the in-vehicle camera 100 according to the embodiment of the present disclosure. FIG. 9 is a view of the in-vehicle camera 100 as viewed from the back surface side of the in-vehicle camera 100. In FIG. 9, a back surface of the main body portion of the in-vehicle camera 100 is formed by the rear chassis 900.

FIG. 10 is a front view of the in-vehicle camera 100 according to the embodiment of the present disclosure. FIG. 10 is a view of the in-vehicle camera 100 as viewed from the front side of the in-vehicle camera 100. FIG. 10 is a view of the in-vehicle camera 100 viewed from a direction opposite to that in FIG. 9. In FIG. 10, the front surface of the main body portion of the in-vehicle camera 100 is formed by a front surface of the third storage case 300. A hole portion is formed at a center of the front surface of the third storage case 300. The lens module component group 200 is drawn out from the inside of the in-vehicle camera 100 to the outside of the main body portion of the in-vehicle camera 100 through the hole portion formed in the front surface of the third storage case 300.

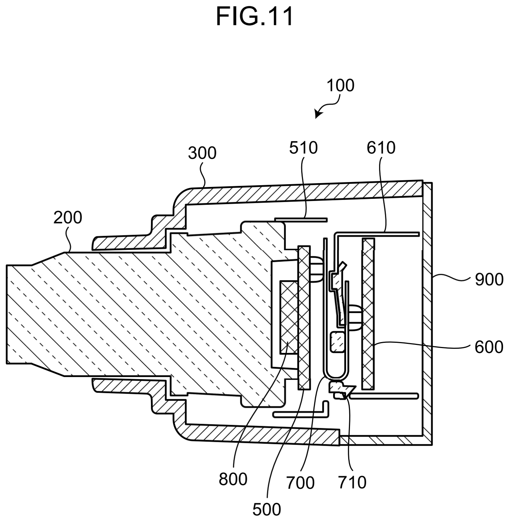

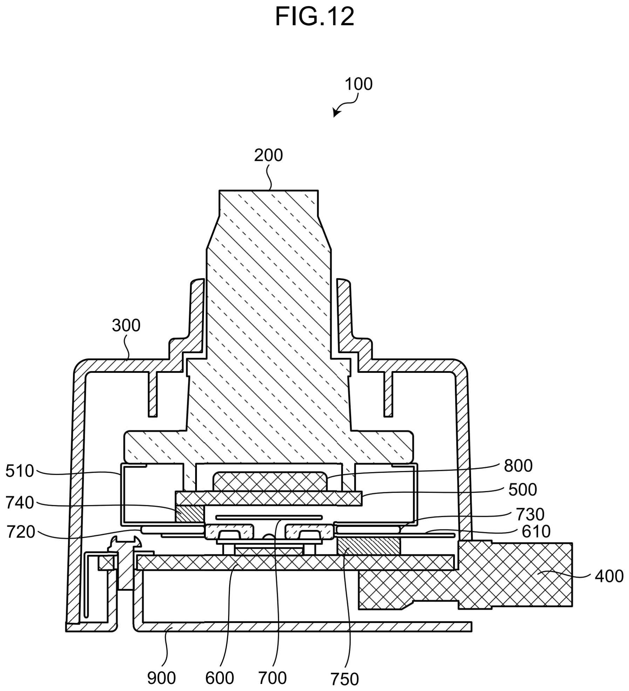

Next, an internal structure of the in-vehicle camera 100 according to the embodiment of the present disclosure will be described with reference to FIGS. 11 and 12.

FIG. 11 is a cross-sectional view taken along line A-A of the in-vehicle camera 100 according to the embodiment of the present disclosure. FIG. 11 is a cross-sectional view of the in-vehicle camera 100 illustrated in FIG. 10 taken along line A-A. As illustrated in FIG. 11, the in-vehicle camera 100 includes a first substrate 500 for imaging processing, a second substrate 600 for information transmission, and a metal plate provided between the first substrate 500 and the second substrate 600. This enables the in-vehicle camera 100 to prevent each of the first substrate 500 and the second substrate 600 from generating an electromagnetic interference wave and from receiving electromagnetic interference, so that EMC performance can be improved. Specifically, the in-vehicle camera 100 further has a metal first storage case 510 that stores the first substrate 500, and a metal second storage case 610 that stores the second substrate 600. The metal plate is a part of either one of the first storage case 510 and the second storage case 610. This enables the in-vehicle camera 100 to prevent each of the first substrate 500 and the second substrate 600 from generating an electromagnetic interference wave and from receiving electromagnetic interference, so that the EMC performance can be improved.

In addition, as illustrated in FIG. 11, an image sensor 800 is provided on the first substrate 500. This enables the in-vehicle camera 100 to use the first substrate 500 as a substrate for imaging processing.

In addition, as illustrated in FIG. 11, the in-vehicle camera 100 further has a wiring member 700 that connects the first substrate 500 and the second substrate 600. Specifically, the wiring member 700 is a flexible substrate. This enables the in-vehicle camera 100 to reduce a spatial distance between the first substrate 500 and the second substrate 600, resulting in further downsizing of the in-vehicle camera 100.

FIG. 12 is a cross-sectional view taken along line B-B of the in-vehicle camera 100 according to the embodiment of the present disclosure. FIG. 12 is a cross-sectional view of the in-vehicle camera 100 illustrated in FIG. 10 taken along line B-B. As illustrated in FIG. 12, the in-vehicle camera 100 includes a first metal member 740 that is in contact with both the first substrate 500 and the first storage case 510. In other words, the in-vehicle camera 100 includes the first metal member 740 that electrically connects the first substrate 500 and the first storage case 510. Specifically, the first metal member 740 is a metal gasket. Accordingly, since the in-vehicle camera 100 can equalize potentials of the first substrate 500 and the first storage case 510 (eliminate a potential difference), the EMC performance can be improved.

As illustrated in FIG. 12, the in-vehicle camera 100 has a second metal member 750 that is in contact with both the second substrate 600 and the second storage case 610. In other words, the in-vehicle camera 100 has the second metal member 750 that electrically connects the second substrate 600 and the second storage case 610. Specifically, the second metal member 750 is a metal gasket. Accordingly, since the in-vehicle camera 100 can equalize potentials of the second substrate 600 and the second storage case 610, the EMC performance can be improved.

Furthermore, as illustrated in FIG. 12, the in-vehicle camera 100 has third metal members 720 and 730 that are in contact with both the first storage case 510 and the second storage case 610. In other words, the in-vehicle camera 100 has the third metal members 720 and 730 that electrically connect the first storage case 510 and the second storage case 610. Specifically, the third metal members 720 and 730 are metal gaskets. Accordingly, since the in-vehicle camera 100 can equalize the potentials of the first storage case 510 and the second storage case 610, the EMC performance can be improved.

In addition, as illustrated in FIG. 12, the lens module component group 200 in which the lens barrel is made of metal is provided so as to be in contact with both the first substrate 500 and the first storage case 510. In other words, the lens module component group 200, the first substrate 500, and the first storage case 510 are provided so as to be electrically connected. Accordingly, since the in-vehicle camera 100 can equalize the potentials of the lens module component group 200, the first substrate 500, and the first storage case 510, the EMC performance can be improved.

In addition, as illustrated in FIG. 12, the external connection connector 400 is provided such that a longitudinal direction thereof intersects a direction in which the first substrate 500 and the second substrate 600 are arranged. In other words, the longitudinal direction of the external connection connector 400 is provided in a direction intersecting an optical axis direction of the optical member (e.g., a lens) included in the lens module component group 200. The external connection connector 400 is provided on the second substrate 600. As a result, the in-vehicle camera 100 can be downsized as compared with a case where the in-vehicle camera 100 is provided such that the longitudinal direction of the external connection connector 400 is the same as the direction in which the first substrate 500 and the second substrate 600 are arranged (alternatively, the optical axis direction of the optical member included in the lens module component group 200) .

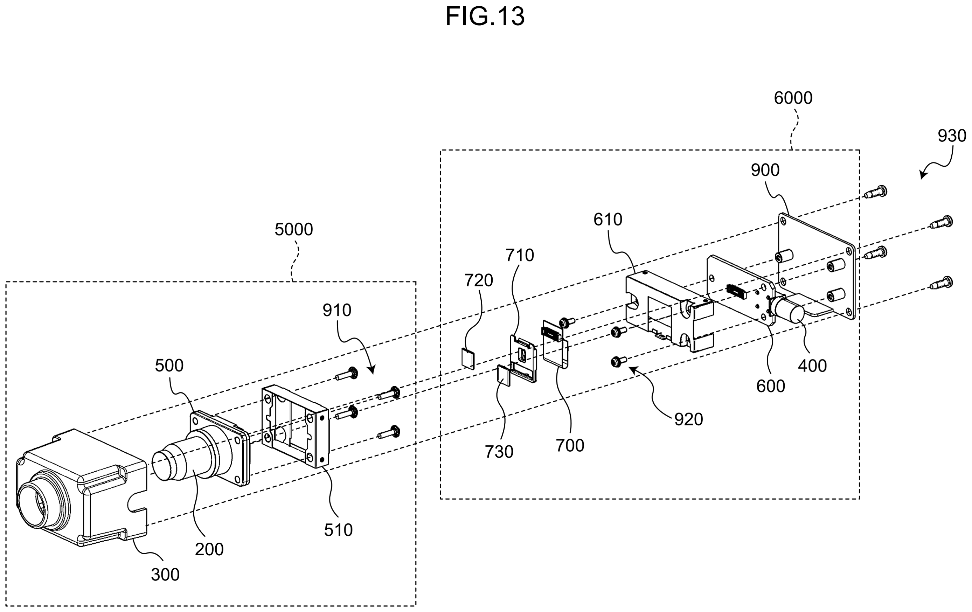

Next, an assembly order of the in-vehicle camera 100 according to the embodiment of the present disclosure will be described with reference to FIGS. 13 to 24.

FIG. 13 is a view illustrating an outline of the assembly order of the in-vehicle camera 100 according to the embodiment of the present disclosure. As illustrated in FIG. 13, the in-vehicle camera 100 has a front component group 5000 formed by combining components on the front side (front surface side) of the in-vehicle camera 100, and a rear component group 6000 formed by combining components on the rear side (back surface side) of the in-vehicle camera 100. The in-vehicle camera 100 is formed by combining the front component group 5000 and the rear component group 6000.

The front component group 5000 is formed by combining the third storage case 300, the lens module component group 200, the first substrate 500, the first storage case 510, and four screw groups 910. The rear component group 6000 is formed by combining the third metal members 720 and 730, a pressing member 710, the wiring member 700, a screw group 920, the second storage case 610, the second substrate 600, the external connection connector 400, and the rear chassis 900. The in-vehicle camera 100 is formed by connecting the front component group 5000 and the rear component group 6000 by four screw groups 930. Note that in FIG. 13, a shape of the rear chassis 900 is schematically illustrated.

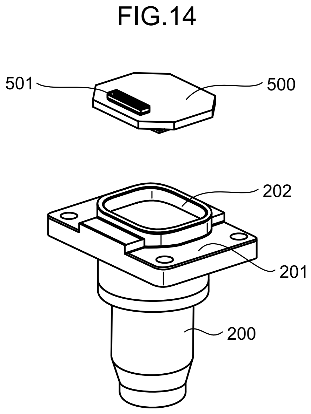

FIG. 14 is a view illustrating an assembly order of a first component group in which the lens module component group 200 and the first substrate 500 according to the embodiment of the present disclosure are combined. As illustrated in FIG. 14, the lens module component group 200 has a first surface 201 provided with a first hole portion 202 into which the first substrate 500 is fitted and provided on the opposite side of the lens barrel. By fitting the first substrate 500 into the first hole portion provided in the first surface of the lens module component group 200, the first component group in which the lens module component group 200 and the first substrate 500 are combined is assembled. A substrate-to-substrate connector 501 is further provided on the first substrate 500.

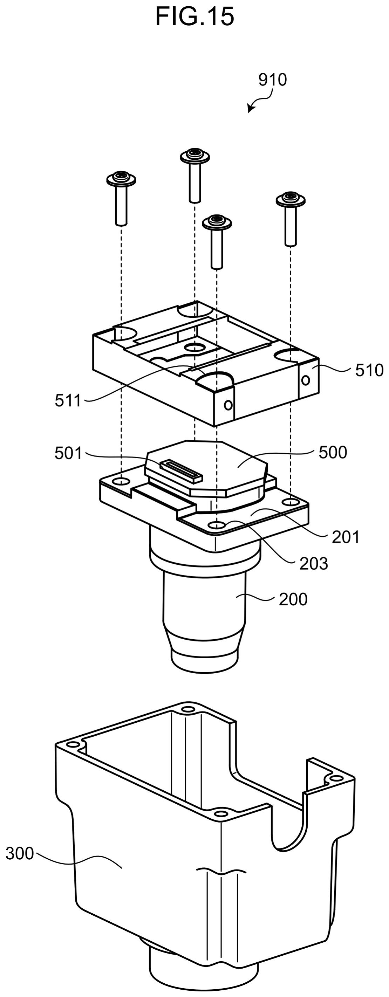

FIG. 15 is a view illustrating an assembly order of the front component group 5000 according to the embodiment of the present disclosure. As illustrated in FIG. 15, in the first component group assembled in FIG. 14, four hole portions 203 are provided in the first surface 201 of the lens module component group 200. On one surface of the first storage case 510, four notch portions 511 which are parts cut out from an outer periphery of the surface are provided. First, a second component group in which the first component group assembled in FIG. 14 and the first storage case 510 are combined is assembled by causing each of the four hole portions 203 provided in the first surface 201 of the lens module component group 200 and each of the four notch portions 511 provided in one surface of the first storage case 510 to go through with each of the four screws of the screw group 910. Subsequently, the second component group is fitted into the opening formed in one surface of the third storage case 300 to form the front component group 5000.

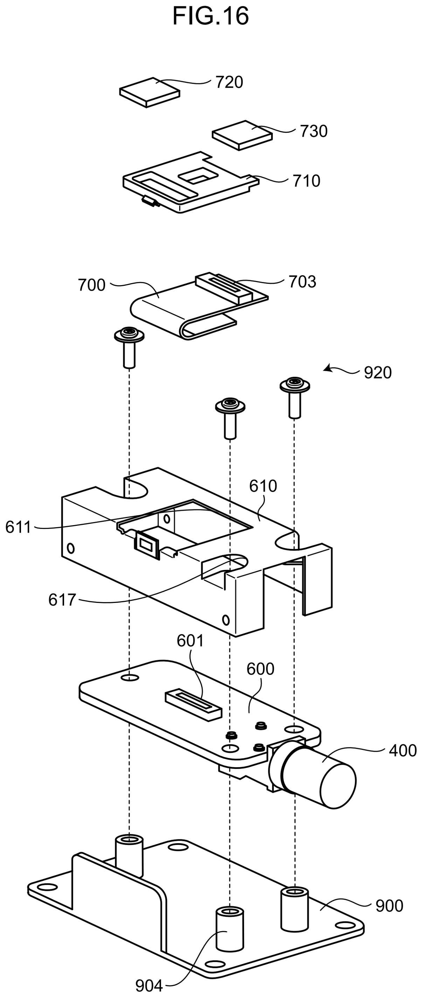

FIG. 16 is a view illustrating an assembly order of the rear component group 6000 according to the embodiment of the present disclosure. As illustrated in FIG. 16, three tubular members 904 are provided on one surface of the rear chassis 900. On one surface of the second storage case 610, three notch portions 617 which are parts cut out from of an outer periphery of the surface are provided. First, the second substrate 600 is sandwiched between the rear chassis 900 and the second storage case 610. Subsequently, a third component group in which the rear chassis 900, the second substrate 600, and the second storage case 610 are combined is assembled by causing each of the holes of the three tubular members 904 provided on one surface of the rear chassis 900 and each of the three notch portions 617 provided in one surface of the second storage case 610 to go through with each of the three screws of the screw group 920. Subsequently, the third metal members 720 and 730 are respectively disposed on opposite sides of the pressing member 710 while placing the wiring member 700 in an opening hole 611 formed in the second storage case 610 and pressing the wiring member 700 by the pressing member 710, thereby forming the rear component group 6000. Furthermore, a substrate-to-substrate connector 601 is provided on the second substrate 600. One end 702 of the wiring member 700 is connected to the second substrate 600 via the substrate-to-substrate connector 601. A substrate-to-substrate connector 703 is provided at the other end 701 of the wiring member 700. The other end 701 of the wiring member 700 is connected to the first substrate 500 via the substrate-to-substrate connector 703.

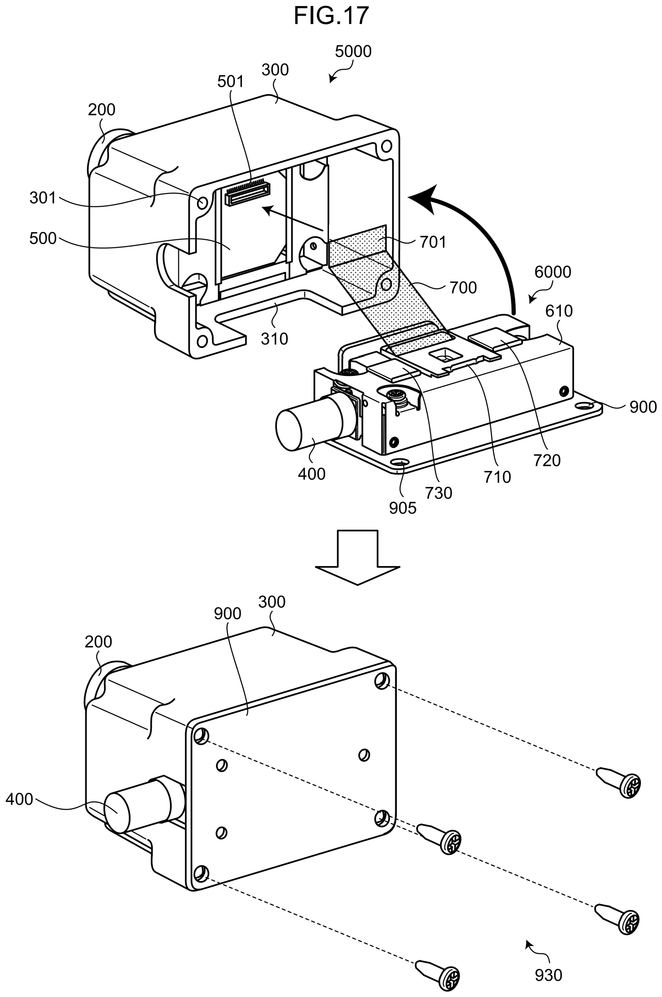

FIG. 17 is a view illustrating the assembly order of the in-vehicle camera 100 according to the embodiment of the present disclosure. As illustrated in FIG. 17, the in-vehicle camera 100 has the third storage case 300 that stores the first storage case 510, and has formed a notch portion 310 which is a part cut out from an outer periphery of the opening formed in one surface of the third storage case 300, the notch portion 310 being cut out in a size that allows entry of the second storage case 610. As illustrated in an upper side of FIG. 17, the first substrate 500 and the second substrate 600 are electrically connected by connecting the substrate-to-substrate connector 501 provided on the first substrate 500 and the substrate-to-substrate connector 703 provided on the other end 701 of the wiring member 700. The rear component group 6000 is rotated with respect to the front component group 5000 to fit one surface of the rear chassis 900 into the opening formed in one surface of the third storage case 300. Four hole portions 301 are provided at positions corresponding to four corners of the outer periphery of the opening formed in the one surface of the third storage case 300. Furthermore, four hole portions 905 are provided at positions corresponding to four corners of the one surface of the rear chassis 900. Next, as illustrated in a lower side of FIG. 17, the front component group 5000 and the rear component group 6000 are connected by causing each of the four hole portions 301 provided in the third storage case 300 and each of the four hole portions 905 provided in the rear chassis 900 to go through with the four screws of the screw group 930. In this manner, the in-vehicle camera 100 is assembled by connecting the front component group 5000 and the rear component group 6000.

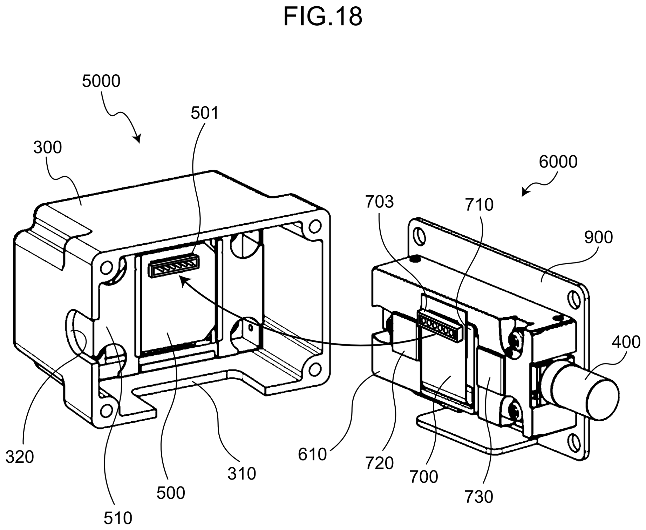

FIG. 18 is a simplified view illustrating a state before connection of the front component group 5000 and the rear component group 6000 according to the embodiment of the present disclosure. As illustrated in FIG. 18, the first substrate 500 and the second substrate 600 are electrically connected by connecting the substrate-to-substrate connector 501 provided on the first substrate 500 and the substrate-to-substrate connector 703 provided on the other end 701 of the wiring member 700.

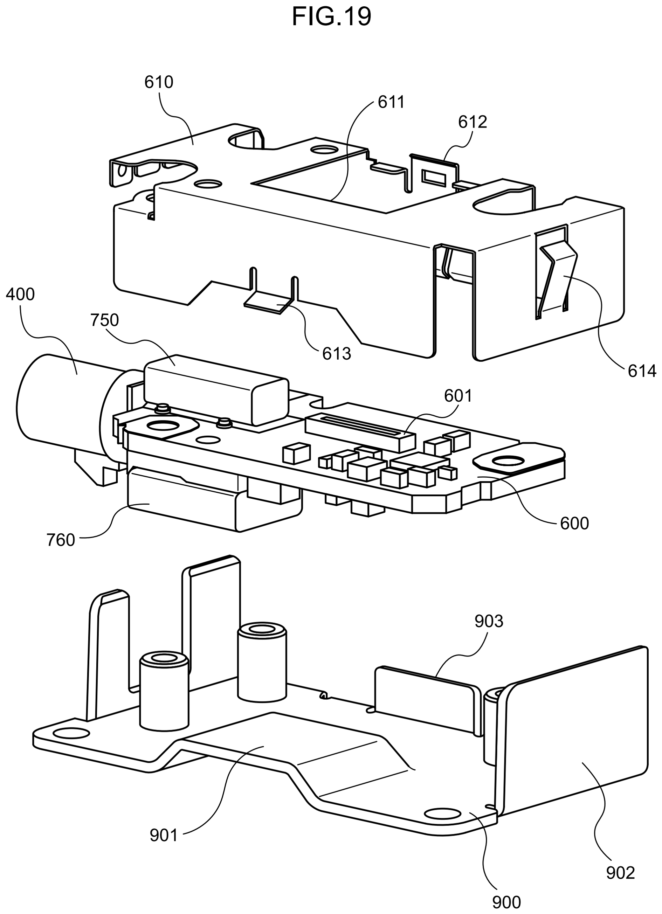

FIG. 19 is a view illustrating a structure of the rear component group 6000 according to the embodiment of the present disclosure. As illustrated in FIG. 19, the second metal member 750 is provided on a surface opposed to the second storage case 610 among opposite surfaces of the second substrate 600. The second metal member 750 is in contact with both the second substrate 600 and the second storage case 610. In other words, the second metal member 750 electrically connects the second substrate 600 and the second storage case 610.

A fourth metal member 760 is provided on a surface opposed to the rear chassis 900 among the opposite surfaces of the second substrate 600. The fourth metal member 760 is in contact with both the second substrate 600 and the rear chassis 900. In other words, the fourth metal member 760 electrically connects the second substrate 600 and the rear chassis 900.

Furthermore, a claw 613 is provided on a first side surface of the second storage case 610. A protrusion 901 is provided on a bottom surface of the rear chassis 900. The claw 613 is in contact with the protrusion 901. In other words, the claw 613 is electrically connected to the protrusion 901. Accordingly, since the in-vehicle camera 100 can equalize the potential of the second storage case 610 and a potential of the rear chassis 900, the EMC performance can be improved.

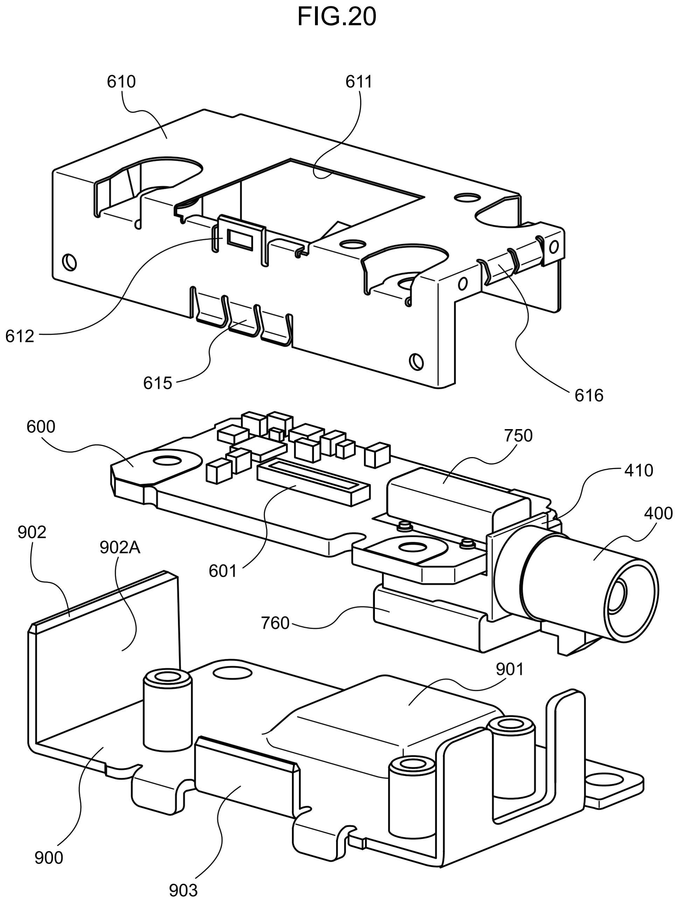

An elastic portion 614 is provided on a second side surface of the second storage case 610. The rear chassis 900 has a first side surface 902. The elastic portion 614 is in contact with an inner surface 902A (see FIG. 20) of the first side surface 902. In other words, the elastic portion 614 is electrically connected to the first side surface 902. Accordingly, since the in-vehicle camera 100 can equalize the potential of the second storage case 610 and a potential of the rear chassis 900, the EMC performance can be improved.

FIG. 20 is a view illustrating the structure of the rear component group 6000 according to the embodiment of the present disclosure. FIG. 20 is a view of FIG. 19 as viewed from the opposite side. As illustrated in FIG. 20, three claws 615 and a hole portion 612 are provided on a third side surface of the second storage case 610. The rear chassis 900 has a second side surface 903. The claw 615 is in contact with the second side surface 903. In other words, the claw 615 is electrically connected to the second side surface 903. Accordingly, since the in-vehicle camera 100 can equalize the potential of the second storage case 610 and a potential of the rear chassis 900, the EMC performance can be improved.

In addition, two claws 616 are provided on a fourth side surface of the second storage case 610. In addition, the in-vehicle camera 100 has a metal connector body 410 connected to the external connection connector 400. The claw 616 is in contact with the connector body 410. In other words, the claw 616 is electrically connected to the connector body 410. Accordingly, since the in-vehicle camera 100 can equalize the potential of the second storage case 610 and a potential of the connector body 410, the EMC performance can be improved.

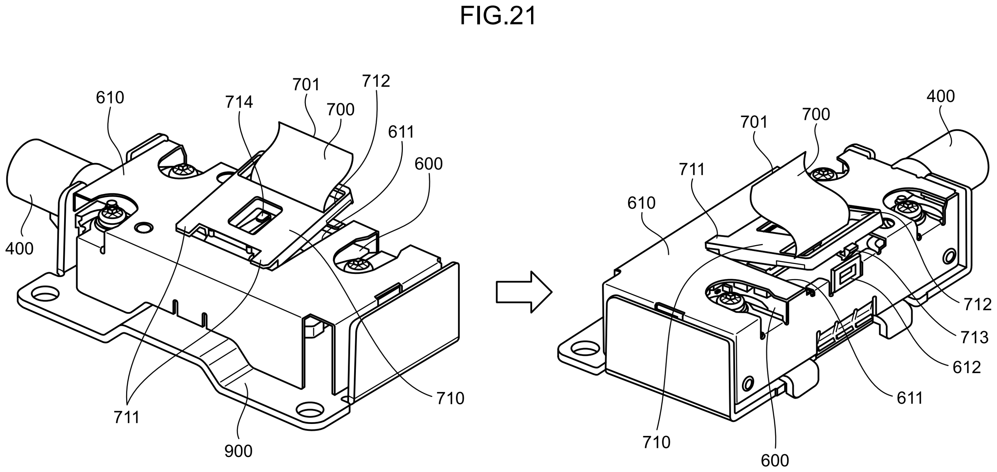

FIG. 21 is a view illustrating an assembly order of the pressing member 710 according to the embodiment of the present disclosure. As illustrated in FIG. 21, the in-vehicle camera 100 has the wiring member 700 that connects the first substrate 500 and the second substrate 600 via the opening hole 611 formed in the second storage case 610. The one end 702 of the wiring member 700 is connected to the second substrate 600, and the other end 701 of the wiring member 700 is connected to the first substrate 500. Specifically, the one end 702 of the wiring member 700 is connected to the second substrate 600 via the substrate-to-substrate connector 601. In addition, the other end 701 of the wiring member 700 is connected to the first substrate 500 via the substrate-to-substrate connector 703.

As illustrated in FIG. 21, the in-vehicle camera 100 has the pressing member 710 that closes the opening hole 611 and presses the wiring member 700 toward the second substrate 600. As illustrated in a left side of FIG. 21, two grooves 711 are provided at one end of the pressing member 710. By inserting the grooves 711 provided at one end of the pressing member 710 into the opening hole 611, the one end of the pressing member 710 is fixed to the opening hole 611. As illustrated in a right side of FIG. 21, a hole portion 712 is provided at the other end of the pressing member 710. The other end 701 of the wiring member 700 is drawn out from the inside of the rear component group 6000 to the outside of the rear component group 6000 through the hole portion 712. A protrusion 713 is provided at the other end of the pressing member 710. First, with one end of the pressing member 710 used as a rotation axis, the other end of the pressing member 710 is rotated in a direction toward the second substrate 600. Subsequently, by inserting the protrusion 713 provided at the other end of the pressing member 710 into the hole portion 612 provided in the third side surface of the second storage case 610, the other end of the pressing member 710 is fixed to the second storage case 610.

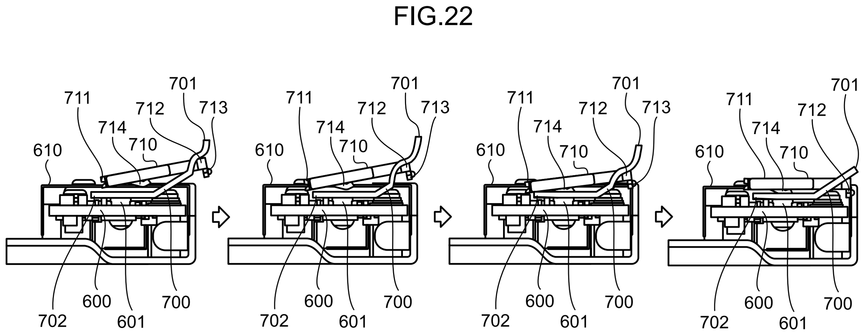

FIG. 22 is a view illustrating an assembly order of the pressing member 710 according to the embodiment of the present disclosure. FIG. 22 is a cross-sectional view of FIG. 21. In two figures on a left side of FIG. 22, by inserting the grooves 711 provided at one end of the pressing member 710 into the opening hole 611, the one end of the pressing member 710 is fixed to the opening hole 611. In addition, an elastic portion 714 is provided at the center of the pressing member 710. In two figures on a right side of FIG. 22, the other end of the pressing member 710 is rotated in the direction toward the second substrate 600 in a state where the one end of the pressing member 710 is fixed to the opening hole 611. As a result, the elastic portion 714 provided in the pressing member 710 presses the wiring member 700 toward the second substrate 600.
Subsequently, by inserting the protrusion 713 provided at the other end of the pressing member 710 into the hole portion 612 provided in the third side surface of the second storage case 610, the other end of the pressing member 710 is fixed to the second storage case 610.

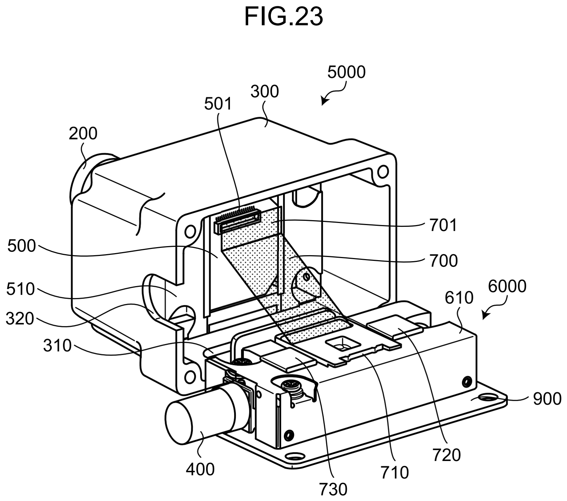

FIG. 23 is a simplified view illustrating a state after the connection of the front component group 5000 and the rear component group 6000 according to the embodiment of the present disclosure. As illustrated in FIG. 23, the first substrate 500 and the second substrate 600 are electrically connected by connecting the substrate-to-substrate connector 501 provided on the first substrate 500 and the substrate-to-substrate connector 703 provided at the other end 701 of the wiring member 700 illustrated in FIG. 18.

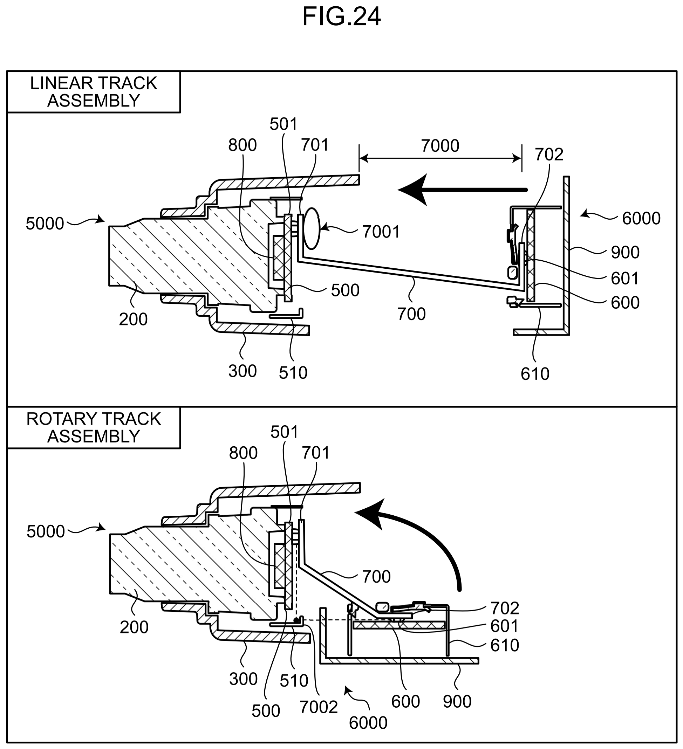

FIG. 24 is a view for explaining a track for assembling the front component group 5000 and the rear component group 6000 according to the embodiment of the present disclosure. An upper side of FIG. 24 is a view for explaining a case where the front component group 5000 and the rear component group 6000 are assembled by linear track assembly. The linear track assembly is an assembly method of assembling the front component group 5000 and the rear component group 6000 while maintaining a state in which a plane direction of the second substrate 600 is parallel to a plane direction of the first substrate 500. As illustrated on the upper side of FIG. 24, in the linear track assembly, a length of the wiring member 700 becomes longer than a distance 7000 from the third storage case 300 to the second substrate 600. In the linear track assembly, when the substrate-to-substrate connector 501 of the first substrate 500 and the substrate-to-substrate connector 703 provided at the other end 701 of the wiring member 700 are connected, a space for pressing a place indicated by 7001 with a finger is required.

A lower side of FIG. 24 is a view for explaining a case where the front component group 5000 and the rear component group 6000 are assembled by rotary track assembly. The rotary track assembly is an assembly method of assembling the front component group 5000 and the rear component group 6000 by rotating the second substrate 600 toward the first substrate 500 with a state where the plane direction of the second substrate 600 intersects the plane direction of the first substrate 500 as an initial position of the second substrate 600. As illustrated on the lower side of FIG. 24, in the rotary track assembly, a length of the wiring member 700 is shorter than a sum of a distance from a rotation axis 7002 to the substrate-to-substrate connector 501 and a distance from the rotation axis 7002 to the substrate-to-substrate connector 601 at the initial position of the second substrate 600. As described above, since the in-vehicle camera 100 enables reduction in the length of the wiring member 700 by using the rotary track assembly, a transmission speed between the first substrate 500 and the second substrate 600 can be improved.

Here, the in-vehicle camera 100 including the first substrate 500 for imaging processing and the second substrate 600 for information transmission has been described. Note that a circuit that performs at least a part of the processing of the recognition unit 73 may be provided on the second substrate 600. For example, the second substrate 600 may be provided with a circuit that performs recognition processing of, using an image captured by the image sensor 800 of the first substrate 500, detecting/recognizing an object in the image, or a circuit that performs processing of measuring a distance to an object detected in an image. In addition, a circuit that performs at least a part of the processing of the recognition unit 73 may be mounted on the first substrate 500 instead of the second substrate 600. For example, the first substrate 500 may be provided with a circuit that performs recognition processing of, using an image captured by the image sensor 800, detecting/recognizing an object in the image, or a circuit that performs processing of measuring a distance to an object detected in an image. Furthermore, a circuit that performs at least a part of the processing of the recognition unit 73 may be provided on each of the first substrate 500 and the second substrate 600. For example, in a case where a circuit that performs the processing of the recognition unit 73 is provided on the first substrate 500 or the second substrate 600, the recognition unit 73 performs processing different from that on the first substrate or the second substrate.

Note that the present technique can also have the following configurations.
(1) An in-vehicle camera comprising:
   a first substrate for imaging processing;
   a second substrate for information transmission; and
   a metal plate provided between the first substrate and the second substrate.
(2) The in-vehicle camera according to (1), further comprising:
   a first storage case made of metal that stores the first substrate; and
   a second storage case made of metal that stores the second substrate, wherein
   the metal plate is a part of either the first storage case or the second storage case.
(3) The in-vehicle camera according to (2), further comprising:
   a first metal member that is in contact with both the first substrate and the first storage case.
(4) The in-vehicle camera according to (2) or (3), further comprising:
   a second metal member that is in contact with both the second substrate and the second storage case.
(5) The in-vehicle camera according to any one of (2) to (4), further comprising:
   a third metal member that is in contact with both the first storage case and the second storage case.
(6) The in-vehicle camera according to any one of (2) to (5), further comprising:
   a wiring member that connects the first substrate and the second substrate via an opening hole formed in the second storage case, wherein
   one end of the wiring member is connected to the second substrate, and the other end of the wiring member is connected to the first substrate.
(7) The in-vehicle camera according to (6), wherein
   the wiring member is a flexible substrate.
(8) The in-vehicle camera according to (6) or (7), further comprising:
   a pressing member that closes the opening hole and presses the wiring member toward the second substrate.
(9) The in-vehicle camera according to any one of (2) to (8), further comprising:
   a third storage case that stores the first storage case, wherein
   a notch portion is formed that is a part cut out from an outer periphery of an opening formed in one surface of the third storage case, the notch portion being cut out in a size that allows entry of the second storage case.
(10) The in-vehicle camera according to any one of (1) to (9), further comprising:
   an external connection connector provided in a direction intersecting a direction in which the first substrate and the second substrate are arranged.

### Reference Signs List

- 100: IN-VEHICLE CAMERA
- 200: LENS MODULE COMPONENT GROUP
- 300: THIRD STORAGE CASE
- 310: NOTCH PORTION
- 400: EXTERNAL CONNECTION CONNECTOR
- 500: FIRST SUBSTRATE
- 510: FIRST STORAGE CASE
- 600: SECOND SUBSTRATE
- 610: SECOND STORAGE CASE
- 611: OPENING HOLE
- 700: WIRING MEMBER
- 710: PRESSING MEMBER
- 720, 730: THIRD METAL MEMBER
- 740: FIRST METAL MEMBER
- 750: SECOND METAL MEMBER
- 900: REAR CHASSIS
- 5000: FRONT COMPONENT GROUP
- 6000: REAR COMPONENT GROUP

## Claims

1. An in-vehicle camera comprising:
a first substrate for imaging processing;
a second substrate for information transmission; and
a metal plate provided between the first substrate and the second substrate.

2. The in-vehicle camera according to claim 1,
further comprising:
a first storage case made of metal that stores the first substrate; and
a second storage case made of metal that stores the second substrate, wherein
the metal plate is a part of either the first storage case or the second storage case.

3. The in-vehicle camera according to claim 2,
further comprising:
a first metal member that is in contact with both the first substrate and the first storage case.

4. The in-vehicle camera according to claim 2, further comprising:
a second metal member that is in contact with both the second substrate and the second storage case.

5. The in-vehicle camera according to claim 2, further comprising:
a third metal member that is in contact with both the first storage case and the second storage case.

6. The in-vehicle camera according to claim 2, further comprising:
a wiring member that connects the first substrate and the second substrate via an opening hole formed in the second storage case, wherein
one end of the wiring member is connected to the second substrate, and the other end of the wiring member is connected to the first substrate.

7. The in-vehicle camera according to claim 6, wherein
the wiring member is a flexible substrate.

8. The in-vehicle camera according to claim 6, further comprising:
a pressing member that closes the opening hole and presses the wiring member toward the second substrate.

9. The in-vehicle camera according to claim 2, further comprising:
a third storage case that stores the first storage case, wherein
a notch portion is formed that is a part cut out from an outer periphery of an opening formed in one surface of the third storage case, the notch portion being cut out in a size that allows entry of the second storage case.

10. The in-vehicle camera according to claim 1, further comprising:
an external connection connector provided in a direction intersecting a direction in which the first substrate and the second substrate are arranged.
